# EUROPÄISCHE PATENTANMELDUNG

(11) **EP 3 700 171 A1**
(43) Veröffentlichungstag der Anmeldung: **26.08.2020**
(21) Anmeldenummer: 19159032.2
(22) Anmeldetag: 25.02.2019
(51) Int. Cl.: H04L 29/08, H04L 29/06

(54) **PRÜFUNG UND BESTÄTIGUNG DER SICHERHEITSKONFIGURATION DER NETZWERKZUGRIFFE AN EINEM RENDEZVOUS-SERVER**

(71) Anmelder: Siemens Aktiengesellschaft, 80333 München (DE)
(72) Erfinder: Falk, Rainer, 85586 Poing (DE)

(57) **Zusammenfassung**

Die Erfindung betritt ein automatisiertes Verfahren zur Prüfung und Bestätigung einer Sicherheits-konfiguration eines ersten Netzwerkzugriffs eines ersten Teilnehmers (A) und eines zweiten Netzwerkzugriffs eines zweiten Teilnehmers (B) auf einen Rendezvous-Server, wobei dem Rendezvous-Server (RS) erste Sicherheitsinformationen über den ersten Netzwerkzugriff des ersten Teilnehmers (A) und zweite Sicherheitsinformationen über den zweiten Netzwerkzugriff des zweiten Teilnehmers (B) bereitgestellt werden.

Die Erfindung betrifft des Weiteren einen Rendezvous-Server (RS), Computerprogrammprodukt und ein computerlesbares Medium. Die Erfindung kann insbesondere im Bereich Netzwerkservice verwendet werden.

## Beschreibung

### HINTERGRUND DER ERFINDUNG

### Gebiet der Erfindung

Die vorliegende Erfindung betrifft ein automatisiertes Verfahren zur Prüfung und Bestätigung einer Sicherheitskonfiguration eines ersten Netzwerkzugriffs eines ersten Teilnehmers und eines zweiten Netzwerkzugriffs eines zweiten Teilnehmers auf einen Rendezvous-Server. Die Erfindung betrifft des Weiteren einen Rendezvous-Server, Computerprogrammprodukt und ein computerlesbares Medium. Die Erfindung kann insbesondere im Bereich Netzwerkservice verwendet werden.

### Beschreibung des Stands der Technik

Ein Rendezvous-Server ist ein Netzwerkdienst, zu dem zwei Teilnehmer jeweils eine Zugriffsverbindung (z.B. IP, IPsec, TCP, TLS) aufbauen. Der Rendezvous-Server ermöglicht eine Datenübertragung zwischen den beiden Teilnehmern. Ein Rendezvous-Server ist insbesondere vorteilhaft, wenn zumindest ein Teilnehmer keine öffentliche IP-Adresse hat. Außerdem ist es nicht erforderlich, dass von außen eine Verbindung in ein geschütztes Netzwerk hinein aufgebaut werden kann. Daher wird ein hoher Schutz vor unzulässigen Netzwerkzugriffen von außen erreicht, da grundsätzlich keine eingehenden Netzwerkverbindungen von außen vorkommen und diese daher an einer Firewall geblockt werden können. Weiterhin ist es möglich, dass Zusatzprüfungen des Netzwerkzugriffs auf dem Rendezvous-Server realisiert werden (z.B. Logging, Monitoring eines Remote-Access-Zugriffs, Angriffserkennung, manuelle Freigabe eines Remote-Zugriffs).

Daher ist der Einsatz eines Rendezvous-Servers in industriellen Automatisierungsnetzen vorteilhaft. Allerdings ist mit einem Rendezvous-Server keine Ende-zu-Ende-Netzwerksicherheit mehr gegeben. Dies ist zwar für manche Überwachungsfunktionen erwünscht, z.B. um ein Monitoring zu ermöglichen. Allerdings liegt einem Kommunikationspartner/ Teilnehmer keine verlässliche Information über den eigentlichen Kommunikationspartner/ Teilnehmer vor.

Es sind unterschiedliche Technologien bekannt, um eine Netzwerk-Infrastruktur zu schützen:
Firewalls filtern die Datenkommunikation, Kommunikationsverbindungen zwischen Geräten und/oder Sites können über ein VPN (IPsec-basiertes VPN, TLS-VPN) geschützt werden, es kann ein Monitoring eines Netzwerks erfolgen, insbesondere durch ein netzwerkbasiertes Intrusion Detection System (NIDS), es können Logdaten durch ein SIEM-System (Security Incident and Event Management) ausgewertet werden. Einzelne Kommunikationsverbindungen können z.B. über TLS/DTLS (Transport Layer Security, Datagram Transport Layer Security) geschützt werden.

Aus der nachveröffentlichten Patentanmeldung EP18167702 A1 ist bekannt, dass ein Modem oder das Netzwerk eine Bestätigungsinformation bereitstellt, die die aktuelle auf dem Netzwerk-Zugang verwendete Security-Konfiguration bestätigt. Dabei ist unter anderem beschrieben, dass einem VPN-Gateway ein Schaltsignal bereitgestellt wird, ob eine VPN-Verbindung (o-ver-the-top Security) aufgebaut werden soll bzw. dass eine Firewall-Policy auswählt wird. Dabei wird jedoch nur eine relativ grobe Unterscheidung ermöglicht (d.h. es erfolgt im Wesentlichen eine Klassifikation, ob die aktuelle Security-Konfiguration auf einer Drahtlosschnittstelle ausreichend ist oder nicht).

### ZUSAMMENFASSUNG DER ERFINDUNG

Die Aufgabe der Erfindung ist es, den Netzzugriff auf einen Rendezvous-Server zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, ein automatisiertes Verfahren und einen Rendezvous-Server anzugeben, wobei dem Rendezvous-Server eine Sicherheitsinformation u.a. über die Sicherheitsstufe des Netzwerkzugriffs von zumindest einem der Kommunikationsteilnehmer auf den Rendezvous-Server ermittelt.

Ein weiterer Aspekt der Erfindung besteht darin, ein automatisiertes Verfahren und einen Rendezvous-Server anzugeben, der mindestens einem der Kommunikationsteilnehmern des Rendezvous-Servers eine Sicherheitsinformation u.a. über die Sicherheitsstufe des Netzwerkzugriffs des jeweils anderen Kommunikationsteilnehmer auf den Rendezvous-Server bereitstellt. Weiterhin wird geprüft, ob die Kombination der jeweiligen Sicherheitsstufe der beiden durch den Rendezvous-Server gekoppelten Netzwerkzugriffe zulässig ist. Die Prüfung kann durch den Rendezvous-Server und/oder durch einen oder beide der beiden Kommunikationsteilnehmer erfolgen.

Die Erfindung beansprucht ein automatisiertes Verfahren zur Prüfung und Bestätigung einer Sicherheitskonfiguration eines ersten Netzwerkzugriffs eines ersten Teilnehmers und eines zweiten Netzwerkzugriffs eines zweiten Teilnehmers auf einen Rendezvous-Server, wobei der Rendezvous-Server erste Sicherheitsinformationen über den ersten Netzwerkzugriff des ersten Teilnehmers und/oder zweite Sicherheitsinformationen über den zweiten Netzwerkzugriff des zweiten Teilnehmers ermittelt.

Der Rendezvous-Server kann die Sicherheitsinformation über einen Netzwerkzugriff eigenständig ermitteln, oder es kann dem Rendezvous-Server eine Information zur Ermittlung der Sicherheitsinformation bereitgestellt werden. Beispielsweise kann ein VPN-Server oder eine SSL-Appliance dem Rendezvous-Server eine entsprechende Information zur Prüfung bereitstellen. Der Netzwerkzugriff weist eine Zugriffsverbindung und/oder einen Zugriffspfad auf.

In einer weiteren Ausgestaltung werden dem ersten Teilnehmer von dem Rendezvous-Server die zweiten Sicherheitsinformationen bereitgestellt, und/oder dem zweiten Teilnehmer werden von dem Rendezvous-Server die ersten Sicherheitsinformationen bereitgestellt.

Dies hat den Vorteil, dass zumindest einem der beiden Kommunikationspartner (dem ersten Teilnehmer oder dem zweiten Teilnehmer) eine Information z.B. eine Sicherheitsinformation über den anderen Netzwerkzugriff auf den Rendezvous-Server bereitstellt wird.

In einer weiteren Ausgestaltung definiert der erste Teilnehmer die Anforderungen an die zweiten Sicherheitsinformationen und/oder der zweite Teilnehmer die Anforderungen an die ersten Sicherheitsinformationen. Das hat den Vorteil, dass die Teilnehmer (der erste Teilnehmer und/oder der zweite Teilnehmer) Mindestanforderungen definieren kann, die auf der anderen Seite umzusetzen sind.

In einer weiteren Ausgestaltung erfolgt eine Prüfung der zweiten Sicherheitsinformationen durch den ersten Teilnehmer und/oder eine Prüfung der ersten Sicherheitsinformationen erfolgt durch den zweiten Teilnehmer und/ oder eine Prüfung der ersten Sicherheitsinformationen und/ oder der zweiten Sicherheitsinformationen erfolgt durch den Rendezvous-Server.

In einer weiteren Ausgestaltung können die ersten Sicherheitsinformationen eine erste Schutzart und eine erste Sicherheitsstufe auf einer definierten Skala enthalten und/oder die zweiten Sicherheitsinformationen kann eine zweite Schutzart und eine zweite Sicherheitsstufe auf der definierten Skala enthalten.

Die ersten Sicherheitsinformationen und die zweiten Sicherheitsinformationen beschreiben somit, auf welche Art bzw. wie gut die jeweils andere Zugriffsverbindung beziehungsweise der jeweils andere Netzwerkzugriff geschützt ist (d.h. konkrete Information über die Art des Schutzes, z.B. der verwendete Kryptoalgorithmus und die Schlüssellänge (Cipher Suites), oder eine abstrahierte Information über ein Security-Level bzw. eine Sicherheitsstufe), oder eine Integritätsbestätigungsinformation eines Teilnehmers. Weiterhin kann eine Seite, d.h der erste Teilnehmer und/oder der zweite Teilnehmer Mindestanforderungen definieren, die auf der anderen Seite umzusetzen sind. Die Prüfung kann durch die definierende Seite selbst erfolgenden oder durch den Rendezvous-Server.

In einer weiteren Ausgestaltung prüft und vergleicht der Rendezvous-Server die erste Sicherheitsstufe und die zweite Sicherheitsstufe nach vorgebaren Kriterien. Dies hat den Vorteil, dass der Rendezvous-Server die Vereinbarkeit der Sicherheitsniveaus prüft. Zum Beispiel erfordert ein hochsicherer Zugriff auf der einen Zugriffsverbindung, dass auch die andere Zugriffsverbindung entsprechende Sicherheitseigenschaften aufweist.

In einer weiteren Ausgestaltung prüft und/oder vergleicht der Rendezvous-Server erste Protokolloptionen sowie erste Cipher Suites des ersten Teilnehmers und zweite Protokolloptionen sowie zweite Cipher Suites des zweiten Teilnehmers nach vorgebaren Kriterien.

Insbesondere können die zulässigen Protokolloptionen und die unterstützten Cipher Suites einer Zugriffsverbindung davon abhängen, welche Protokolloptionen und Cipher Suites auf der anderen Zugriffsverbindung unterstützt werden und/oder ausgewählt wurden.

In einer weiteren Ausgestaltung werden dem Rendezvous-Server die ersten Sicherheitsinformationen und die zweiten Sicherheitsinformationen durch eine Attestierungs-Datenstruktur oder eine Extension in einem TLS-Protokoll bereitgestellt.

Die Erfindung beansprucht außerdem einen Rendezvous-Server, der ausgebildet ist, eine Prüfung und eine Bestätigung einer Sicherheitskonfiguration eines ersten Netzwerkzugriffs eines ersten Teilnehmers und eines zweiten Netzwerkzugriffs eines zweiten Teilnehmers durchzuführen. Der Rendezvous-Server weist eine erste Zugriffseinheit über die dem Rendezvous-Server erste Sicherheitsinformation über den ersten Netzwerkzugriff des ersten Teilnehmers bereitgestellt werden, eine zweite Zugriffseinheit über die dem Rendezvous-Server zweite Sicherheitsinformation über den zweiten Netzwerkzugriff des zweiten Teilnehmers bereitgestellt werden, eine Empfangseinheit, die ausgebildet ist, die erste Sicherheitsinformation und die zweite Sicherheitsinformation zu empfangen und eine Prüfeinheit, die ausgebildet ist, die erste Sicherheitsinformation und die zweite Sicherheitsinformation zu prüfen, auf.

In einer weiteren Ausgestaltung ist der Rendezvous-Server nach ausgebildet ein erfindungsgemäßes Verfahren auszuführen.

Die Erfindung beansprucht außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

Die Erfindung beansprucht außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

Die Sicherheitsinformationen können vom Rendezvous-Server z.B. durch eine Attestierungs-Datenstruktur oder eine Extension in einem TLS-Protokoll bereitgestellt werden. Diese können eine Information über eine oder mehrere der folgenden Kriterien enthalten:
- Es können Detail-Infos über die Security-Konfiguration d.h. die Sicherheitskonfiguration bzw. ausgehandelten Security-Option (z. B. Schutzart, Sicherheitsstufe) der anderen Zugriffsverbindung z.B. das Zertifikat des Kommunikationspartners, ausgehandelte Cipher Suite, verwendete TLS-Optionen der anderen Zugriffsverbindung enthalten sein. So kann beispielweise überprüft werden, ob die Kommunikationsverbindung oder die Zugriffsverbindung im Rahmen des Netzwerkzugriffs (erster Netzwerkzugriffs oder zweiter Netzwerkzugriffs) tatsächlich mit dem erwarteten Kommunikationspartner (als Beispiel für den ersten Teilnehmer oder den zweiten Teilnehmer) besteht. Auch kann überprüft werden, dass beide Zugriffspfade/ Zugriffsverbindung im Rahmen des Netzwerkzugriffs (erster Netzwerkzugriffs oder zweiter Netzwerkzugriffs) tatsächlich beim gleichen Rendezvous-Server terminieren (d.h. dass das gleiche Zertifikat zur Authentisierung des Rendezvous-Servers für beide Zugriffspfade verwendet wurde; andernfalls könnte ein Man-in-the-Middle-Angriff vorliegen).
- Eine Sicherheitsstufe (Security Level, z.B. SL1, SL2, SL3, SL4) der anderen Zugriffsverbindung im Rahmen des Netzwerkzugriffs (erster Netzwerkzugriffs oder zweiter Netzwerkzugriffs). Die verwendete Security-Konfiguration/ Sicherheitskonfiguration der anderen Zugriffsverbindung wird durch den Rendezvous-Server analysiert, um die Sicherheitsstufe zu erreichen.
- Integritätsbestätigungsinformation: Es können Detail-Infos über die Security-Konfiguration des anderen Teilnehmers bestätigt werden, z.B. eine Attestierung eines Trusted Platform Moduls und/oder einer geschützten Ausführungsumgebung (z.B. Intel Security Guard Extension SGX), eine Information über den aktuellen Patch-Status und die Security-Konfiguration des Teilnehmers, z.B. ob ein Virenscanner aktiv ist.
- Policy-OK: Eine von der einen Seite (d.h. dem ersten Teilnehmer oder dem zweiten Teilnehmer) vorgegebene oder eine ihr durch den Rendezvous-Server zugeordnete Sicherheits-Policy wird durch die andere Zugriffsverbindung im Rahmen des Netzwerkzugriffs (erster Netzwerkzugriffs oder zweiter Netzwerkzugriffs) erfüllt.

Zusammenfassend bietet die Erfindung den Vorteil, dass ein Knoten (d.h. der erste Teilnehmer oder der zweite Teilnehmer), der einen Rendezvous-Service/ Rendezvous-Server verwendet, kann überprüfen, mit wem er "eigentlich" kommuniziert, und wie diese Kommunikation geschützt ist.

Dadurch kann sichergestellt werden, dass nicht nur die "eigene" Sicherheitsbeziehung zum Rendezvous-Server den eigenen Vorgaben entspricht, sondern die gesamte Kommunikationsstrecke zum Kommunikationspartner.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein erstes Ausführungsbeispiel der Erfindung,
- Fig. 2: ein zweites Ausführungsbeispiel der Erfindung,
- Fig. 3: ein drittes Ausführungsbeispiel der Erfindung und
- Fig. 4: ein Rendezvous-Server.

### DETAILLIERTE BESCHREIBUNG DER ERFINDUNG

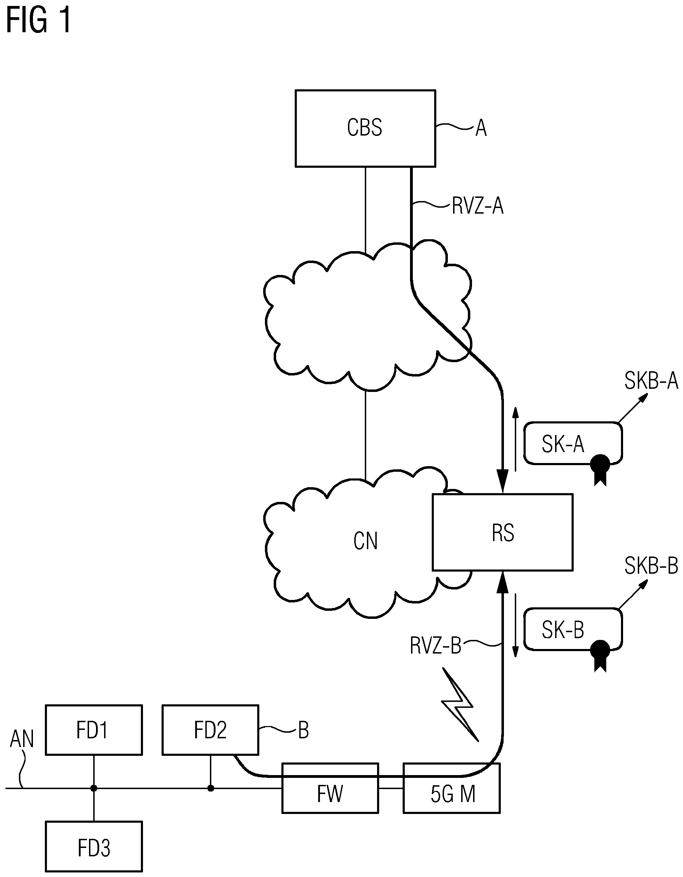

Fig. 1 zeigt einen Rendezvous-Server RS, der als Edge Cloud Service auf einer Edge Cloud realisiert ist. Der Rendezvous-Server RS bietet einen Rendezvous-Service. Es muss von beiden Seiten, d.h. von einem ersten Teilnehmer A und von einem zweiten Teilnehmer B eine Verbindung zum Rendezvous-Service aufgebaut werden. Im Beispiel ist der erste Teilnehmer A ein Cloud-Backend-Service CBS. Der zweite Teilnehmer B ist im Beispiel eine Field Device 2 FD2 eines Automatisierungsnetzwerks AN. Alternativ könnte der zweite Teilnehmer B zum Beispiel eine Field Device 1 FD1 oder eine Field Device 3 FD3 sein. Das Automatisierungsnetzwerk AN weißt außerdem eine Firewall FW und ein 5G Modem 5G M auf.

Der erste Teilnehmer A baut eine erste Rendezvous-Server-Zugangsverbindung RZV-A (die erste Rendezvous-Server-Zugangsverbindung RZV-A wird im Rahmen eines ersten Netzwerkzugriffs verwendet) auf und der zweite Teilnehmer B baut eine zweite Rendezvous-Server-Zugangsverbindung RZV-B (die zweite Rendezvous-Server-Zugangsverbindung RZV-B wird im Rahmen eines zweiten Netzwerkzugriffs verwendet) auf. Insbesondere kann diese Verbindung über TLS oder IPsec aufgebaut werden. Im Beispiel baut der erste Teilnehmer A die Verbindung über ein Cellular Network CN, d.h. ein mobiles Datennetz, auf. Die erste Rendezvous-Server-Zugriffsverbindung RZV-A und zweite Rendezvous-Server-Zugriffsverbindung RZV-B wird beispielsweise im Rahmen eines Netzwerkzugriffs aufgebaut.

Der Rendezvous-Server RS ist vorgesehen, um die Daten zwischen der ersten Rendezvous-Server-Zugangsverbindung RZV-A und der zweiten erste Rendezvous-Server-Zugangsverbindung RZV-B weiterzuleiten. Dies hat z.B. bei einem Remote-Servicezugang den Vorteil, dass keine direkte Netzwerkverbindung in ein Automatisierungsnetzwerk aufgebaut werden muss.

Erfindungsgemäß ermittelt der Rendezvous-Service eine erste Sicherheitskonfiguration SK-A mit einer ersten Sicherheitskonfigurationsbestätigung SKB-A der ersten Rendezvous-Zugangsverbindung RZV-A sowie eine zweite Sicherheitskonfiguration SK-B mit einer zweiten Sicherheitskonfigurationsbestätigung SKB-B der zweiten Rendezvous-Zugangsverbindung RZV-B. Die erste und die zweite Sicherheitskonfigurationsbestätigung SKB-A, SKB-B geben an, wie die jeweilige Verbindung geschützt ist (speziell die zur Authentisierung verwendeten Zertifikate der jeweiligen Endpunkte, die ausgewählte Cipher Suite und Protokolloptionen). Die erste Sicherheitskonfigurationsbestätigung SKB-A kann auch als erste Sicherheitsinformation bezeichnet werden. Die zweite Sicherheitskonfigurationsbestätigung SKB-B kann auch als zweite Sicherheitsinformation bezeichnet werden.

Eine Datenübertragung durch Teilnehmer A über die aufgebaute Netzwerkverbindung (erste Rendezvous-Server-Zugriffsverbindung RZV-A) wird dabei erst dann freigegeben, wenn die Sicherheitskonfigurationsbestätigung SKB-B vorliegt und überprüft wurde. Entsprechend wird eine Datenübertragung durch Teilnehmer B über die aufgebaute Netzwerkverbindung (zweite Rendezvous-Server-Zugriffsverbindung RZV-B) erst dann freigegeben, wenn die Sicherheitskonfigurationsbestätigung SKB-A vorliegt und überprüft wurde.

Auch ist es möglich, dass der Rendezvous-Server prüft, ob die Stärke der beiden Sicherheitskonfigurationen SK-A und SK-B übereinstimmt (z.B. gleiche Schlüssellänge), und eine Datenübertragung zwischen Teilnehmer A und Teilnehmer B nur bei Übereinstimmung freigibt.

Weiterhin kann eine Bindung an die Security-Session erfolgen, indem ein Session Identifier (z.B. ein Session Key Hash) einer oder beider Verbindungen aufgenommen wird. Dadurch kann eine Komponente überprüfen, dass die erste Sicherheitskonfigurationsbestätigung SKB-A und die zweite Sicherheitskonfigurationsbestätigung SKB-B tatsächlich zu der von ihr aufgebauten Sicherheitsbeziehung (Security-Session) gehört.

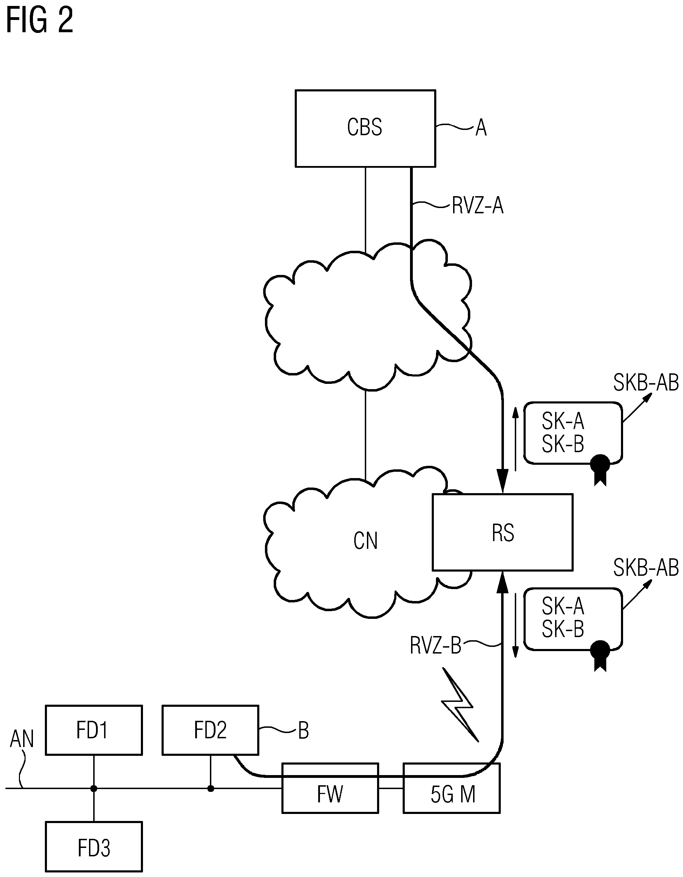

Fig. 2 zeigt ein alternatives Ausführungsbeispiel zu Fig. 1. Die Elemente von Fig. 1 sind ebenfalls enthalten.

Weiterhin ist es, wie in Fig. 2 gezeigt, möglich, dass eine gemeinsame dritte Sicherheitskonfigurationsbestätigung SKB-AB für beide Zugangsverbindungen (den der ersten Rendezvous-Zugangsverbindung RZV-A und den der zweiten Rendezvous-Zugangsverbindung RZV-B) durch den Rendezvous-Server bereitgestellt wird. Diese bestätigt die erste Sicherheitskonfiguration SK-A und die zweite Sicherheitskonfiguration SC-B in einer gemeinsamen dritten Sicherheitskonfigurationsbestätigung SKB-AB.

Die dritte Sicherheitskonfigurationsbestätigung SKB-AB kann beispielsweise "in-band" übertragen werden, z.B. als TLS-Extension oder als Protokoll-Header, oder "out-of-band" über eine separate Rendezvous-Management-Netzwerkverbindung zum Rendezvous-Server RS. Die Übertragung erfolgt insbesondere beim Verbindungsaufbau. Eine Datenübertragung über die aufgebaute Netzwerkverbindung wird dabei erst dann freigegeben, wenn die Sicherheitskonfigurationsbestätigung SKB-AB vorliegt und überprüft wurde.

Weiterhin ist es möglich, dass bei bestehender Verbindung der Rendezvous-Server RS einen der Kommunikationspartner (beispielsweise den ersten Teilnehmer A) über eine Änderung der Sicherheitskonfiguration der Gegenseite (d.h. des anderen Zugriffspfads und beispielsweise der zweite Sicherheitskonfiguration SK-B) informiert, z.B. wenn ein Session Key Update (Re-keying, Key-Update, Renegotiation) erfolgt. Dies ermöglicht eine Überwachung, ob bei bestehender Verbindung vorgesehene Security-Protokollabläufe auf der anderen Seite d.h. beim anderen Teilnehmer tatsächlich erfolgen (z.B. ein mindestens stündlich vorgesehenes Session-Key-Update). Weiterhin ist es möglich, dass ein Session-Key-Update auf einem Zugriffspfad ein Session-Key-Update des anderen Zugriffspfads auslöst. Das Auslösen kann durch den Rendezvous-Server RS erfolgen. Alternativ ist es möglich, dass ein auf den Rendezvous-Server RS zugreifender Knoten ein Session-Key-Update ausführt, wenn er vom Rendezvous-Server RS darüber informiert wird, dass auf dem anderen Zugriffspfad ein Session-Key-Update erfolgt ist.

Die Sicherheitskonfiguration (auch als Security-Policy-Information bezeichenbar), beispielsweise die erste Sicherheitskonfiguration SK-A und/oder die zweite Sicherheitskonfiguration SK-B wird vom Rendezvous-Server RS durch eine gemeinsame dritte Sicherheitskonfigurationsbestätigung SKB-AB bestätigt (in Fig. 2 durch ein graphisches Siegel dargestellt, das eine digitale Signatur oder eine kryptographische Prüfsumme des Rendezvous-Service repräsentiert). Im dargestellten Beispiel kann Field Device 2 FD2 überprüfen, wie das "andere Bein" (d.h. der Netzwerkzugriff des ersten Teilnehmers A, der andere Netzwerkzugriffspfad) der Rendezvous-Verbindung geschützt ist, d.h. SK-A. Dadurch kann beispielsweise Field Device 2 FD2 das Zertifikat des Cloud-Backend-Service CBS prüfen, ohne dass es selbst eine Verbindung zum Cloud-Backend-Service CBS aufbaut.

Ebenso kann der Cloud-Backend-Service CBS (z.B. ein Service für Wartungszugang zu Field Device 2 FD2) die zweite Sicherheitskonfiguration SK-B prüfen, die beschreibt, wie die Verbindung zwischen Field Device 2 FD2 und dem Rendezvous-Server RS geschützt ist. Dadurch kann beispielsweise der Cloud-Backend-Service CBS die zweite Sicherheitskonfigurationsbestätigung SKB-B von Field Device 2 FD2 prüfen, ohne dass er selbst eine Verbindung zu der Field Device 2 FD2 aufbaut.

Weiterhin kann der Rendezvous-Server RS prüfen, ob die beiden erste Sicherheitskonfiguration SK-A und die zweite Sicherheitskonfiguration SK-B zueinander kompatibel sind (z.B. jeweils beidseitig authentisiert, authenticated Encryption mit >= 128 Bit Verschlüsselungsstärke).

Wenn die tatsächliche Sicherheitskonfiguration der anderen Zugangsverbindung (der ersten Rendezvous-Zugangsverbindung SK-A oder der zweiten Rendezvous-Zugangsverbindung SK-B) zum Rendezvous-Server RS gemäß der Security-Bestätigung (der ersten Sicherheitskonfigurationsbestätigung SKB-A oder der zweiten Sicherheitskonfigurationsbestätigung SKB-B) nicht den lokalen Vorgaben entspricht, kann die Verbindung abgebaut werden, der Verbindungsaufbau abgebrochen werden, oder eine restriktive Filterung konfiguriert werden, um die übertragbaren Daten zu beschränken.

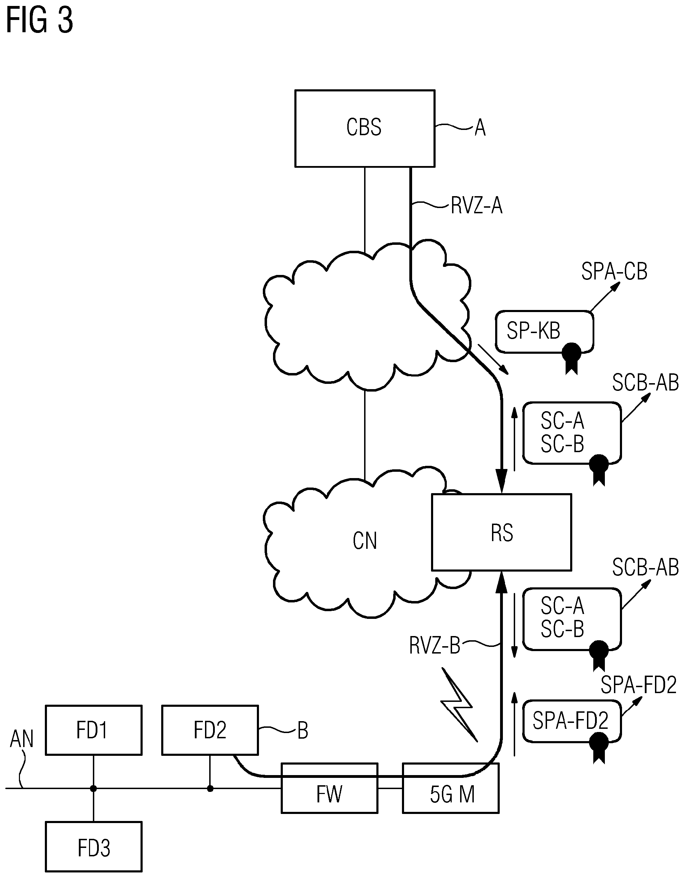

Fig. 3 zeigt eine Variante, bei der die Field Device 2 D2 und der Cloud-Backend-Service CBS jeweils ihre Security-Policy (die Field Device 2 Sicherheits-Policy SP-FD2 von Field Device 2 FD2 und die Cloud-Backend Sicherheits-Policy SP-CB von dem Cloud-Backend-Service CBS) an den Rendezvous-Server RS übertragen. Dies ermöglicht dem Rendezvous-Server RS zu prüfen, ob die andere Zugriffsverbindung/ Zugangsverbindung die Policy-Vorgaben des Kommunikationspartners/ des anderen Teilnehmers (erster Teilnehmer A oder zweiter Teilnehmer) erfüllt. Diese sind vorzugsweise kryptographisch geschützt, d.h. durch die Field Device 2 FD2 bzw. durch den Cloud-Backend-Service CBS digital signiert (Cloud-Backend Sicherheits-Policy-Bestätigung SPB-CB und/ oder Field Device 2 Sicherheits-Policy-Bestätigung SPB-FD2).

In einer weiteren Variante (nicht dargestellt) kann die Sicherheits-Policy-Bestätigung (Cloud-Backend Sicherheits-Policy-Bestätigung SPB-CB und/oder Field Device 2 Sicherheits-Policy-Bestätigung SPB-FD2) auch an dem Kommunikationspartner / den anderen Teilnehmer (erster Teilnehmer A oder zweiter Teilnehmer) zur Prüfung bereitgestellt werden (durch den Rendezvous-Server RS oder direkt durch einen Kommunikationspartner (erster Teilnehmer A oder zweiter Teilnehmer)).

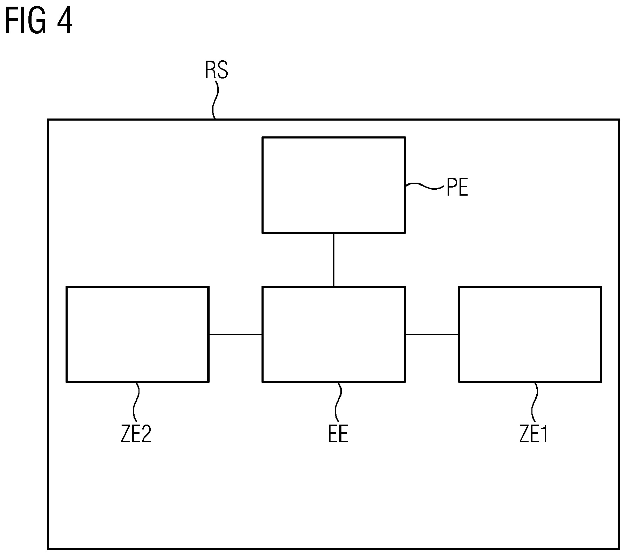

Fig. 4 zeigt einen Rendezvous-Server RS, der ausgebildet ist, das erfindungsgemäße Verfahren und die Ausführungsbeispiele der vorherigen Figuren auszuführen. Der Rendezvous-Server RS weist eine erste Zugriffseinheit ZE1, eine zweite Zugriffseinheit ZE2, eine Empfangseinheit EE und eine Prüfeinheit PE auf.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Automatisiertes Verfahren zur Prüfung und Bestätigung einer Sicherheitskonfiguration eines ersten Netzwerkzugriffs eines ersten Teilnehmers (A) und eines zweiten Netzwerkzugriffs eines zweiten Teilnehmers (B) auf einen Rendezvous-Server,
wobei
der Rendezvous-Server (RS) erste Sicherheitsinformationen über den ersten Netzwerkzugriff des ersten Teilnehmers (A)
und/ oder zweite Sicherheitsinformationen über den zweiten Netzwerkzugriff des zweiten Teilnehmers (B) ermittelt.

2. Automatisiertes Verfahren nach Anspruch 1,
**dadurch gekennzeichnet,**
**dass** dem ersten Teilnehmer (A) von dem Rendezvous-Server (RS) die zweiten Sicherheitsinformationen bereitgestellt werden,
und/oder
dem zweiten Teilnehmer (B) von dem Rendezvous-Server (RS) die ersten Sicherheitsinformationen bereitgestellt werden.

3. Automatisiertes Verfahren nach einem der vorherigen Ansprüche,
**dadurch gekennzeichnet,**
**dass** der erste Teilnehmer (A) die Anforderungen an die zweiten Sicherheitsinformationen und/oder der zweite Teilnehmer (B) die Anforderungen an die ersten Sicherheitsinformationen definiert.

4. Automatisiertes Verfahren nach Anspruch 3,
**dadurch gekennzeichnet,**
**dass** eine Prüfung der zweiten Sicherheitsinformationen durch den ersten Teilnehmer (A) erfolgt und/oder eine Prüfung der ersten Sicherheitsinformationen durch den zweiten Teilnehmer (B) erfolgt und/ oder
eine Prüfung der ersten Sicherheitsinformationen und/oder der zweiten Sicherheitsinformationen durch den Rendezvous-Server (RS) erfolgt.

5. Automatisiertes Verfahren nach einem der vorherigen Ansprüche,
**dadurch gekennzeichnet,**
**dass** die ersten Sicherheitsinformationen eine erste Schutzart und eine erste Sicherheitsstufe auf einer definierten Skala und/oder
die zweiten Sicherheitsinformationen eine zweite Schutzart und eine zweite Sicherheitsstufe auf der definierten Skala enthalten.

6. Automatisiertes Verfahren nach Anspruch 5,
**dadurch gekennzeichnet,**
**dass** der Rendezvous-Server (RS) die erste Sicherheitsstufe und die zweite Sicherheitsstufe nach vorgebaren Kriterien prüft und vergleicht.

7. Automatisiertes Verfahren nach einem der vorherigen Ansprüche,
**dadurch gekennzeichnet,**
**dass** der Rendezvous-Server (RS)
erste Protokolloptionen sowie erste Cipher Suites des ersten Teilnehmers (A) und
zweite Protokolloptionen sowie zweite Cipher Suites des zweiten Teilnehmers (B)
nach vorgebaren Kriterien prüft und vergleicht.

8. Automatisiertes Verfahren nach einem der vorherigen Ansprüche,
**dadurch gekennzeichnet,**
**dass** dem Rendezvous-Server (RS) die ersten Sicherheitsinformationen und die zweiten Sicherheitsinformationen durch eine Attestierungs-Datenstruktur oder eine Extension in einem TLS-Protokoll bereitgestellt werden.

9. Ein Rendezvous-Server (RS), der ausgebildet ist, eine Prüfung und eine Bestätigung einer Sicherheitskonfiguration eines ersten Netzwerkzugriffs eines ersten Teilnehmers (A) und eines zweiten Netzwerkzugriffs eines zweiten Teilnehmers (B) durchzuführen, aufweisend:
- eine erste Zugriffseinheit (ZE1) über die dem Rendezvous-Server (RS) erste Sicherheitsinformation über den ersten Netzwerkzugriff des ersten Teilnehmers (A) bereitgestellt werden,
- eine zweite Zugriffseinheit (ZE2) über die dem Rendezvous-Server (RS) zweite Sicherheitsinformation über den zweiten Netzwerkzugriff des zweiten Teilnehmers (B) bereitgestellt werden,
- eine Empfangseinheit (EE), die ausgebildet ist, die erste Sicherheitsinformation und die zweite Sicherheitsinformation zu empfangen und
- eine Prüfeinheit (PE), die ausgebildet ist, die erste Sicherheitsinformation und die zweite Sicherheitsinformation zu prüfen.

10. Ein Rendezvous-Server (RS) nach Anspruch 9, der ausgebildet ist ein Verfahren nach einem der Ansprüche 1 bis 8 auszuführen.

11. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.

12. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 8 ausgeführt werden, wenn das Computerprogramm auf der Recheneinheit ausgeführt wird.
